# EUROPEAN PATENT APPLICATION

(11) **EP 2 830 357 A1**
(43) Date of publication of application: **28.01.2015**
(21) Application number: 14176047.0
(22) Date of filing: 08.07.2014
(51) Int. Cl.: H04W 36/00

(54) **Method and apparatus for single-radio-voice-call continuity**

(30) Priority: 25.07.2013 US 201313950984
(71) Applicant: Nokia Solutions and Networks Oy, 02610 Espoo (FI)
(72) Inventor: Leis, Peter, 82377 Penzberg (DE); Shen, Jiadong, 81379 München (DE)

(57) **Abstract**

A method and apparatus can be configured to receive, by a service-centralization-&-continuity application server, an identifier from an access-transfer-control-function entity. The method can also include transmitting a message to the access-transfer-control-function entity, wherein the message comprises the identifier, and the identifier allows the access-transfer-control-function entity to authorize the transmitted message.

## Description

### BACKGROUND:

### Field:

Embodiments of the invention relate to enhancing single-radio-voice-call continuity.

### Description of the Related Art:

Long-term Evolution (LTE) is a standard for wireless communication that seeks to provide improved speed and capacity for wireless communications by using new modulation/signal processing techniques. The standard was proposed by the 3^{rd} Generation Partnership Project (3GPP), and is based upon previous network technologies. Since its inception, LTE has seen extensive deployment in a wide variety of contexts involving the communication of data.

### SUMMARY:

According to a first embodiment, a method can comprise receiving, by a service-centralization-&-continuity application server, an identifier from an access-transfer-control-function entity. The method can also include transmitting a message to the access-transfer-control-function entity. The message comprises the identifier. The identifier allows the access-transfer-control-function entity to authorize the transmitted message.

In the method of the first embodiment, receiving the identifier comprises receiving the identifier from an access-transfer-control-function entity of a visited-public-land-mobile-network.

In the method of the first embodiment, transmitting the message comprises transmitting a session-initiation-protocol message.

In the method of the first embodiment, transmitting the message comprises transmitting single-radio-voice-call-continuity-related information.

In the method of the first embodiment, receiving the identifier comprises receiving an identifier that is unique and registration-specific.

According to a second embodiment, an apparatus can comprise at least one processor. The apparatus can include at least one memory including computer program code. The at least one memory and the computer program code can be configured, with the at least one processor, to cause the apparatus at least to receive an identifier from an access-transfer-control-function entity. The apparatus can be caused to transmit a message to the access-transfer-control-function entity. The message comprises the identifier, and the identifier allows the access-transfer-control-function entity to authorize the transmitted message.

In the apparatus of the second embodiment, receiving the identifier comprises receiving the identifier from an access-transfer-control-function entity of a visited-public-land-mobile-network.

In the apparatus of the second embodiment, transmitting the message comprises transmitting a session-initiation-protocol message.

In the apparatus of the second embodiment, transmitting the message comprises transmitting single-radio-voice-call-continuity-related information.

In the apparatus of the second embodiment, receiving the identifier comprises receiving an identifier that is unique and registration-specific.

According to a third embodiment, a computer program product can be embodied on a non-transitory computer readable medium. The computer program product can be configured to control a processor to perform a process, comprising receiving, by a service-centralization-&-continuity application server, an identifier from an access-transfer-control-function entity. The process can also include transmitting a message to the access-transfer-control-function entity. The message comprises the identifier, and the identifier allows the access-transfer-control-function entity to authorize the transmitted message.

According to a fourth embodiment, a method can comprise transmitting, by an access-transfer-control-function entity, an identifier to a service-centralization-&-continuity application server. The method can include receiving a message from the service-centralization-&-continuity application server. The method can include authorizing the message based on whether or not the identifier is associated with the message.

In the method of the fourth embodiment, transmitting the identifier comprises transmitting the identifier to a service-centralization-&-continuity application server of a home-public-land-mobile-network.

In the method of the fourth embodiment, receiving the message comprises receiving a session-initiation-protocol message.

In the method of the fourth embodiment, receiving the message comprises receiving single-radio-voice-call-continuity-related information.

In the method of the fourth embodiment, transmitting the identifier comprises transmitting an identifier that is unique and registration-specific.

According to a fifth embodiment, an apparatus can comprise at least one processor. The apparatus can include at least one memory including computer program code. The at least one memory and the computer program code can be configured, with the at least one processor, to cause the apparatus at least to transmit an identifier to a service-centralization-&-continuity application server. The apparatus can also receive a message from the service-centralization-&-continuity application server. The apparatus can also authorize the message based on whether or not the identifier is associated with the message.

In the apparatus of the fifth embodiment, transmitting the identifier comprises transmitting the identifier to a service-centralization-&-continuity application server of a home-public-land-mobile-network.

In the apparatus of the fifth embodiment, receiving the message comprises receiving a session-initiation-protocol message.

In the apparatus of the fifth embodiment, receiving the message comprises receiving single-radio-voice-call-continuity-related information.

In the apparatus of the fifth embodiment, transmitting the identifier comprises transmitting an identifier that is unique and registration-specific.

According to a sixth embodiment, a computer program product can be embodied on a non-transitory computer readable medium. The computer program product can be configured to control a processor to perform a process, comprising transmitting, by an access-transfer-control-function entity, an identifier to a service-centralization-&-continuity application server. The process can also include receiving a message from the service-centralization-&-continuity application server. The process can also include authorizing the message based on whether or not the identifier is associated with the message.

### BRIEF DESCRIPTION OF THE DRAWINGS:

For proper understanding of the invention, reference should be made to the accompanying drawings, wherein:
Fig. 1 illustrates a method of registration.
Fig. 2 illustrates a flowchart of a method in accordance with embodiments of the invention.
Fig. 3 illustrates a flowchart of a method in accordance with embodiments of the invention.
Fig. 4 illustrates an apparatus in accordance with embodiments of the invention.
Fig. 5 illustrates an apparatus in accordance with embodiments of the invention.
Fig. 6 illustrates an apparatus in accordance with embodiments of the invention.

### DETAILED DESCRIPTION:

Embodiments of the invention relate to enhancing single-radio-voice-call continuity. One embodiment of the present invention is directed to the handling of communication between (1) a Service-Centralization-and-Continuity (SCC) Application Server (AS) of a home Public Land Mobile Network (PLMN), and (2) an Access Transfer Control Function (ATCF) entity of a visited PLMN, as described in more detail below.

An Internet Multimedia Subsystem (IMS) can be generally understood as a standardized architectural framework for providing multimedia services over an Internet Protocol. For example, IMS can be utilized in conjunction with IP-based networks to provide Voice-Over-LTE (VoLTE) services. In view of the variety of services that can be supported by IMS, operators have demonstrated interest in technologies relating to IMS.

One function supported by the IMS is Single-Radio-Voice-Call Continuity (SRVCC). SRVCC allows access transfer between a Packet-Switched (PS) network and a Circuit-Switched (CS) network. For example, upon performing access transfer using SRVCC, a user equipment that is initially accessing a PS network can be subsequently switched to access a CS network.

SRVCC functionality is defined/specified in, at least, 3GPP Technical Specification 23.216, 3GPP Technical Specification 23.237, and 3GPP Technical Specification 24.237.

As described above, embodiments of the present invention are directed to enhancement of SRVCC. Since LTE Release-8, IMS has supported SRVCC for access transfer from PS networks to CS networks. The functionality of SRVCC has been further enhanced in LTE Release-10 to allow for better user experience, specifically to allow for shorter media-path interruption, for example.

However, in order to enable SRVCC access transfer, a Service-Centralization-&-Continuity Application Server (SCC AS) may need to provide subscriber-specific information to an ATCF entity. In one embodiment, the SCC AS can be in a home network, and the ATCF can be in a visited network. The SCC AS may provide this subscriber-specific information to the ATCF when a UE performs a registration process with the IMS. In order to provide the subscriber-specific information, the SCC AS sends a message to the ATCF. In one embodiment, the message can be a Session-Initiation-Protocol (SIP) message that includes SRVCC-related information.

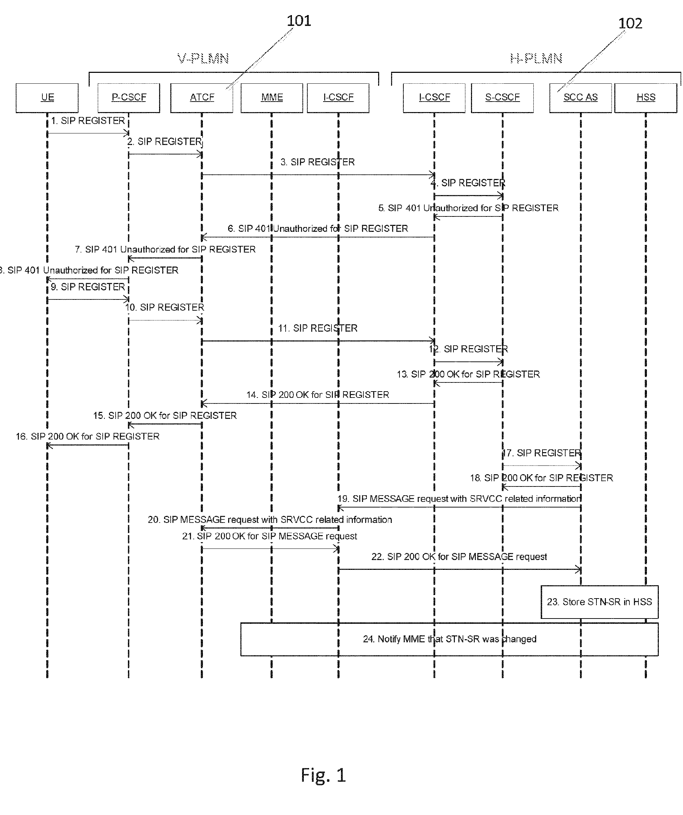

Fig. 1 illustrates a method of registration. The method of registration illustrates a method according to 3GPP Technical Specification 24.237.

When using SRVCC to facilitate access transfer, certain difficulties exist. For example, once the ATCF entity receives the SIP MESSAGE (with SRVCC-related information) from the SCC AS, the ATCF may need to ensure that the received SIP MESSAGE is really coming from the SCC AS. For example, referring to Fig. 1, ATCF 101 may need to ensure that the Session-Initiation-Protocol (SIP MESSAGE) 19 and 20 are really coming from the SCC AS 102. ATCF 101 may need to ensure that an SIP MESSAGE is coming from an entity that is authorized to send SRVCC-related information.

According to the previous approaches, 3GPP Technical Specification 24.237 has specified that the authorization for an SIP MESSAGE (with SRVCC-related information), received by the ATCF, shall be based on information contained within a P-Asserted-Identity header field. The P-Asserted-Identity header field generally will contain an identity of the SCC AS that sends the SIP MESSAGE. The ATCF will need a list of SCC ASs that are authorized to send the SRVCC-related information in the SIP MESSAGE. When the SIP MESSAGE arrives at ATCF, the ATCF will check whether the identity reflected by the P-Asserted-Identity header field of the SIP MESSAGE corresponds to an identity contained in the list of SCC ASs that are authorized to send the SRVCC-related information. This list can be a locally-configured list

However, the previous approaches generally encounter certain difficulties. According to the previous approaches, as described above, an ATCF needs to have a list that contains all SCC ASs that are authorized to send the SRVCC-related information. As such, the ATCF needs to have a list of all authorized SCC ASs of all roaming partners. Such a list generally requires a large amount of maintenance work. In order to maintain the list, the list of the ATCF must be updated every time a new SCC AS is installed in one of the many roaming partners' networks. Such updates are generally not manageable. Further, in order to effectively apply such updates, operators would be required to share identities of entities in their network to other operators, which is generally unfeasible.

In view of the above, certain embodiments of the present invention are directed to an ATCF that provides a unique and registration-specific identifier/token to an SCC AS during a part of the registration process. The ATCF inserts the identifier/token in every forwarded REGISTER request (e.g., REGISTER REQUEST 3 and 11). SCC AS receives the original REGISTER request received by S-CSCF 12 as a body of a third-party REGISTER request 17, which can be considered as a separate registration procedure. The first registration procedure is between UE and S-CSCF (see steps 1 through 16), and the second registration procedure is between S-CSCF and SCC AS (see steps 17 and 18). The SIP MESSAGE request (see steps 19-22) is Enhanced-SRVCC-specific (eSRVCC-specific), similar for 23 and 24. The identifier generally is not delivered to the UE involved in the REGISTRATION. When the SCC AS sends an SIP MESSAGE to the ATCF, the SCC AS includes this unique and registration-specific identifier within the sent SIP MESSAGE. The unique and registration-specific identifier can be included in the SIP MESSAGE along with the SRVCC-related information of the SIP message that is sent to the ATCF.

Once the ATCF receives the SIP MESSAGE containing the SRVCC-related information, the ATCF can either authorize or not authorize the SIP MESSAGE based on whether the received identifier/token is acceptable. For example, if the ATCF receives a SIP MESSAGE that contains an identifier/token that originates from the ATCF itself, then the SIP MESSAGE can be authorized. In one embodiment, the SIP MESSAGE can be authorized only if the received SIP MESSAGE contains an identifier/token that originates from the ATCF.

As such, embodiments of the present invention are directed to an ATCF entity that can determine whether a sender is an authorized sender based on information (such as the aforementioned identifier) that the ATCF entity has itself generated. In one embodiment, the information that is used to make the determination regarding whether a sender is an authorized sender can be generated solely by the ATCF itself. In certain embodiments of the present invention, no configuration of addresses is needed. Specifically, no involvement of data (such as addresses of SCC ASs in other networks) is generally needed.

With regard to the ATCF generating/sending the unique identifier/token, the ATCF can generate the unique identifier/token and include the unique identifier/token in the SIP REGISTER request. The SIP REGISTER request is a SIP request sent by an SIP client (UE). The request is forwarded hop-by-hop to an SIP server (S-CSCF). The SIP server will return a SIP response that is forwarded hop-by-hop to the SIP client. The P-CSCF/ATCF/I-CSCF can be considered to be SIP proxies to route the SIP request/responses.

A pairing of SIP request and response is called an SIP transaction. The registration procedure can include one or more SIP REGISTER transaction(s). In Fig. 1, the first REGISTER request is challenged with a negative 401 response. The second REGISTER request contains a response generated by a UE to the challenge sent by the S-CSCF. A positive response 200 "OK" is returned when the authentication is successful (the response inserted by the UE in the second REGISTER request is a valid one). It is possible that additional SIP REGISTER transactions are needed, e.g., if there are synchronization problems for the keys used for authentication. In this case, the S-CSCF will send a new 401 challenge to the UE. A registration procedure can be seen between the first REGISTER request sent by UE (#1) to the first positive response sent to UE (#16).

A 3^{rd} party registration procedure (#17 - #18) includes another SIP REGISTER transaction, which is configurable via an IMS user profile. For eSRVCC, both procedures are needed. As such, the registration procedure can be considered to include messages #1 - #18, and the SIP REGISTER request can refer to SIP message #3 and #11.

In one embodiment, the ATCF can include a Universal Resource Identifier (URI) along with the SIP REGISTER. The URI can comprise an identifier corresponding to "+g.3gpp.atcf-mgmt-uri." The URI can contain the aforementioned identifier/token, and the URI can be unique.

The unique identifier/token can be generated by encoding an identifier/token as shown in the following example. The SIP REGISTER (when transmitted from the ATCF) can correspond to:
REGISTER sip:home1.net SIP/2.0
Feature-Caps: *;+g.3gpp.atcf="<tel:+1-237-888-9999>"; +g.3gpp.atcf-mgmt-uri = "<sip:unique-____________________token@atcf.visited2.net>";+g.3gpp.actf-path="<sip:termsdgfdfwe@atcf.visited2.net>";+g.3gpp.mid-call;+g.3gpp.srvcc-alerting

SIP REGISTER is an SIP request, which can contains different components like SIP headers as defined in RFC3261 and 3GPP 24.229.

The Feature-Caps is a mandatory SIP header defined by 3GPP for eSRVCC service. The "+g.3gpp.atcf-mgmt-uri" is a mandatory parameter field of this SIP header for Enhanced-SRVCC (eSRVCC) service. The SCC-AS uses the value of this parameter as the address of the SIP MESSAGE request it has sent to ATCF. The content of this parameter is transparent for SCC-AS because it just copies the content (URI) into the SIP MESSAGE request. Therefore, when the ATCF inserts any indication in this parameter, the SCC AS will copy it into SIP MESSAGE request. The ATCF can then be sure that the SIP MESSAGE request is sent by an SCC-AS, which received the SIP REGISTER request forwarded by the ATCF.

The ATCF can keep a list of "unique and registration-specific-token" values to be used. When receiving an SIP MESSAGE, the SCC AS will send an SIP MESSAGE to the ATCF in order to provide the SRVCC-related information.

SIP REGISTER request is a certain type of SIP request. The SCC-AS will receive it in message 17. SIP MESSAGE request is another type of SIP request. The SCC-AS sends it to ATCF (19 and 20). There are many kinds of SIP requests, e.g., SIP INVITE, SIP BYE, etc. The SCC AS may need to include the token (received in the SIP REGISTER) in the SIP MESSAGE sent to the ATCF. Therefore, the SCC AS can use the content of the "+g.3gpp.atcf-mgmt-uri" feature tag and can include this in the R-URI of the SIP MESSAGE that is going to be sent to the ATCF.

The ATCF can receive an SIP MESSAGE sent from the SCC AS. In order to authorize the received SIP MESSAGE (which includes the SRVCC-related information being sent by an authorized subscriber), the ATCF compares the Request-URI (R-URI) of the received SIP MESSAGE against the values that it has itself assigned and provided to the SCC AS. As described above, the ATCF can have these values stored in a list.

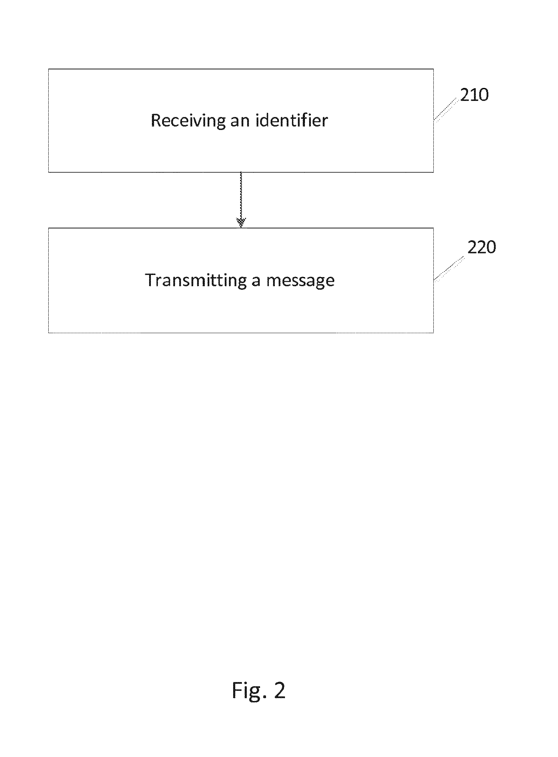

Fig. 2 illustrates a flowchart of a method in accordance with an embodiment of the invention. The method illustrated in Fig. 2 includes, at 210, receiving, by a service-centralization-&-continuity application server, an identifier from an access-transfer-control-function entity. The method can also include, at 220, transmitting a message to the access-transfer-control-function entity, wherein the message comprises the identifier. The identifier allows the access-transfer-control-function entity to authorize the transmitted message.

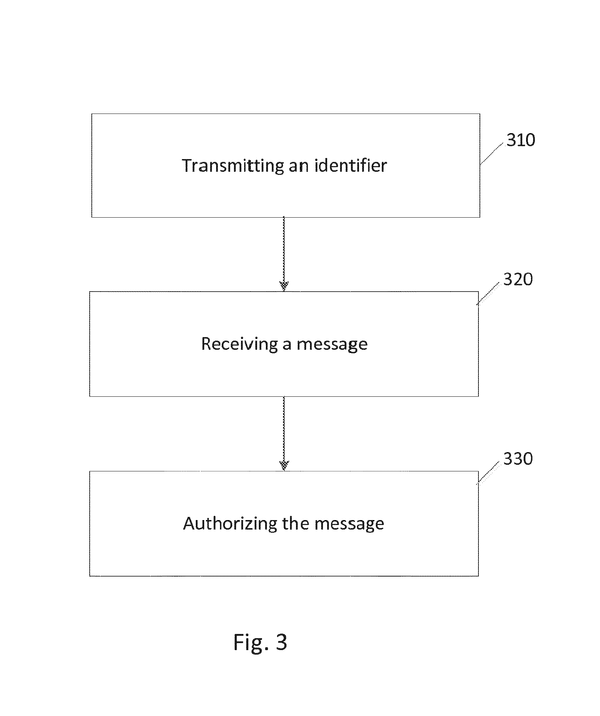

Fig. 3 illustrates a flowchart of a method in accordance with another embodiment. The method illustrated in Fig. 3 includes, at 310, transmitting, by an access-transfer-control-function entity, an identifier to a service-centralization-&-continuity application server. The method also includes, at 320, receiving a message from the service-centralization-&-continuity application server. The method also includes, at 330, authorizing the message based on whether or not the identifier is associated with the message.

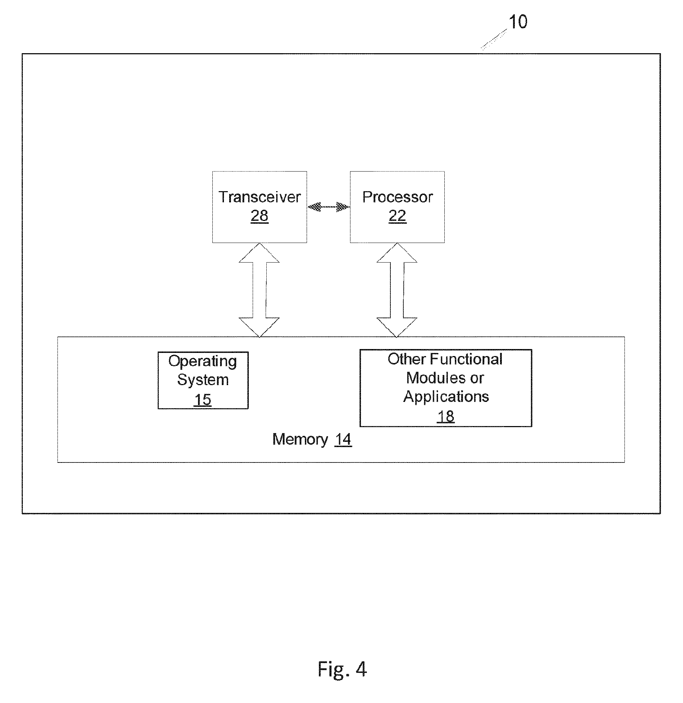

Fig. 4 illustrates an apparatus in accordance with an embodiment of the invention. The apparatus can correspond to an ATCF entity and/or an SCC AS, for example. Apparatus 10 can include a processor 22 for processing information and executing instructions or operations. Processor 22 can be any type of general or specific purpose processor. While a single processor 22 is shown in Fig. 4, multiple processors can be utilized according to other embodiments. Processor 22 can also include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 can further include a memory 14, coupled to processor 22, for storing information and instructions that can be executed by processor 22. Memory 14 can be one or more memories and of any type suitable to the local application environment, and can be implemented using any suitable volatile or nonvolatile data storage technology such as a semiconductor-based memory device, a magnetic memory device and system, an optical memory device and system, fixed memory, and removable memory. For example, memory 14 include any combination of random access memory (RAM), read only memory (ROM), static storage such as a magnetic or optical disk, or any other type of non-transitory machine or computer readable media. The instructions stored in memory 14 can include program instructions or computer program code that, when executed by processor 22, enable the apparatus 10 to perform tasks as described herein.

Apparatus 10 can also include one or more antennas (not shown) for transmitting and receiving signals and/or data to and from apparatus 10. Apparatus 10 can further include a transceiver 28 that modulates information on to a carrier waveform for transmission by the antenna(s) and demodulates information received via the antenna(s) for further processing by other elements of apparatus 10. In other embodiments, transceiver 28 can be capable of transmitting and receiving signals or data directly.

Processor 22 can perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In an embodiment, memory 14 can store software modules that provide functionality when executed by processor 22. The modules can include an operating system 15 that provides operating system functionality for apparatus 10. The memory can also store one or more functional modules 18, such as an application or program, to provide additional functionality for apparatus 10. The components of apparatus 10 can be implemented in hardware, or as any suitable combination of hardware and software.

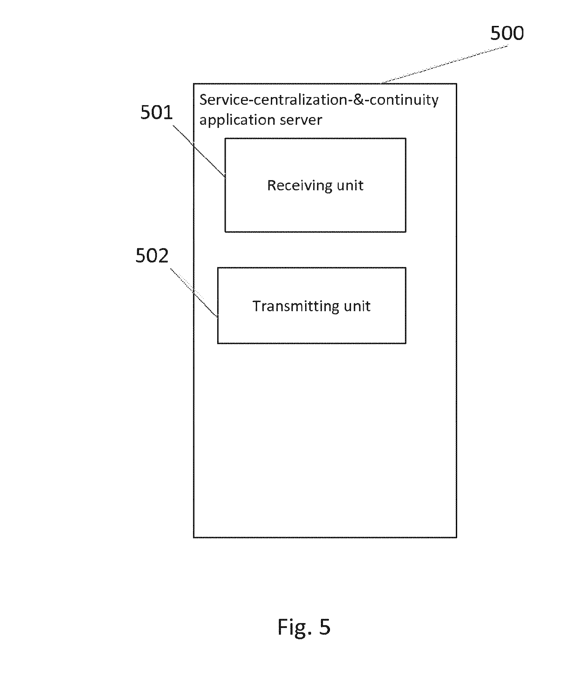

Fig. 5 illustrates an apparatus in accordance with another embodiment. Apparatus 500 can be a service-centralization-&-continuity application server, for example. Apparatus 500 can include a receiving unit 501 that receives an identifier from an access-transfer-control-function entity. Apparatus 500 can also include a transmitting unit 502 that transmits a message to the access-transfer-control-function entity, wherein the message comprises the identifier. The identifier allows the access-transfer-control-function entity to authorize the transmitted message.

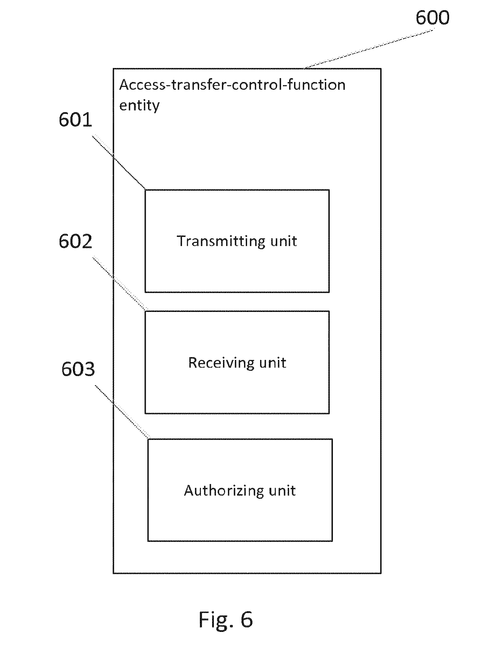

Fig. 6 illustrates an apparatus in accordance with yet another embodiment. Apparatus 600 can be an access-transfer-control-function entity, for example. Apparatus 600 can include a transmitting unit 601 that transmits an identifier to a service-centralization-&-continuity application server. Apparatus 600 can also include a receiving unit 602 that receives a message from the service-centralization-&-continuity application server. Apparatus 600 can also include an authorizing unit 603 for authorizing the message based on whether or not the identifier is associated with the message.

The described features, advantages, and characteristics of the invention can be combined in any suitable manner in one or more embodiments. One skilled in the relevant art will recognize that the invention can be practiced without one or more of the specific features or advantages of a particular embodiment. In other instances, additional features and advantages can be recognized in certain embodiments that may not be present in all embodiments of the invention. One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention.

## Claims

1. A method, comprising:
receiving, by a service-centralization-&-continuity application server, an identifier from an access-transfer-control-function entity; and
transmitting a message to the access-transfer-control-function entity, wherein the message comprises the identifier, and the identifier allows the access-transfer-control-function entity to authorize the transmitted message.

2. The method according to claim 1, wherein receiving the identifier comprises receiving the identifier from an access-transfer-control-function entity of a visited-public-land-mobile-network.

3. The method according to claim 1, wherein transmitting the message comprises transmitting a session-initiation-protocol message.

4. The method according to claim 1, wherein transmitting the message comprises transmitting single-radio-voice-call-continuity-related information.

5. The method according to claim 1, wherein receiving the identifier comprises receiving an identifier that is unique and registration-specific.

6. An apparatus, comprising:
at least one processor; and
at least one memory including computer program code,
the at least one memory and the computer program code configured, with the at least one processor, to cause the apparatus at least to
receive an identifier from an access-transfer-control-function entity; and
transmit a message to the access-transfer-control-function entity, wherein the message comprises the identifier, and the identifier allows the access-transfer-control-function entity to authorize the transmitted message.

7. The apparatus according to claim 6, wherein receiving the identifier comprises receiving the identifier from an access-transfer-control-function entity of a visited-public-land-mobile-network.

8. The apparatus according to claim 6, wherein transmitting the message comprises transmitting a session-initiation-protocol message.

9. The apparatus according to claim 6, wherein transmitting the message comprises transmitting single-radio-voice-call-continuity-related information.

10. The apparatus according to claim 6, wherein receiving the identifier comprises receiving an identifier that is unique and registration-specific.

11. A computer program product, embodied on a non-transitory computer readable medium, the computer program product configured to control a processor to perform a process, comprising:
receiving, by a service-centralization-&-continuity application server, an identifier from an access-transfer-control-function entity; and
transmitting a message to the access-transfer-control-function entity, wherein the message comprises the identifier, and the identifier allows the access-transfer-control-function entity to authorize the transmitted message.

12. The computer program product according to claim 11, wherein receiving the identifier comprises receiving the identifier from an access-transfer-control-function entity of a visited-public-land-mobile-network.

13. The computer program product according to claim 11, wherein transmitting the message comprises transmitting a session-initiation-protocol message.

14. The computer program product according to claim 11, wherein transmitting the message comprises transmitting single-radio-voice-call-continuity-related information.

15. The computer program product according to claim 11, wherein receiving the identifier comprises receiving an identifier that is unique and registration-specific.
